# EUROPÄISCHE PATENTSCHRIFT

(11) **EP 2 924 248 B1**
(45) Veröffentlichungstag und Bekanntmachung des Hinweises auf die Patenterteilung: **26.10.2016**
(21) Anmeldenummer: 15154951.6
(22) Anmeldetag: 13.02.2015
(51) Int. Cl.: F01L 1/344, F16K 31/06

(54) **Hydraulikventil für einen Schwenkmotorversteller einer Nockenwelle**
Hydraulic valve for a pivoting engine adjuster of a camshaft
Soupape hydraulique pour un déphaseur d'arbre à came

(30) Priorität: 13.03.2014 DE 102014103400
(43) Veröffentlichungstag der Anmeldung: 30.09.2015
(73) Patentinhaber: Hilite Germany GmbH, 97828 Marktheidenfeld (DE)
(72) Erfinder: Schulze, Dietmar, 35394 Gießen (DE); Kaufmann, Dietmar, 97837 Tiefenthal (DE)

(56) Entgegenhaltungen:
- EP-A1- 2 466 081
- EP-A1- 2 796 673
- WO-A2-2008/067935
- DE-A1-102010 005 604

## Beschreibung

### Technisches Gebiet

Die Erfindung betrifft ein Hydraulikventil, insbesondere für einen Schwenkmotorversteller einer Nockenwelle einer Brennkraftmaschine eines Kraftfahrzeugs.

### Stand der Technik

Aus der WO 2009/138153 A1 ist ein Hydraulikventil bekannt, insbesondere einer Phasenverstellvorrichtung einer Nockenwelle, mit einem in einem Betriebsmittelzulauf angeordneten ersten Rückschlagventil und mit einem zwischen zwei Betriebsmittelanschlüssen angeordneten zweiten Rückschlagventil. Die beiden Rückschlagventile weisen ein gemeinsames, bewegtes. Ventilelement, wie ein gemeinsamer Ventilkörper, eine gemeinsame Ventilfeder, ein gemeinsames Anschlagmittel, auf. Dadurch kann auf eine doppelte Ausführung von Ventilelementen, die für die Rückschlagventile notwendig sind, verzichtet werden, wodurch eine einfache und kompakte Bauweise für das Hydraulikventil realisiert wird. Das Hydraulikventil weist dabei ein als Ventilfeder für zwei Sperrelemente ausgebildetes Ventilelement auf, wodurch auf eine zweite Ventilfeder verzichtet werden kann. Die Ventilfeder ist einstückig für beide Rückschlagventile ausgebildet. Das Hydraulikventil weist ferner ein als Anschlagmittel ausgebildetes Ventilelement auf, das dazu vorgesehen ist, Öffnungswege der Rückschlagventile zu begrenzen. Das Anschlagmittel ist dabei einstückig für beide Rückschlagventile ausgebildet.

Die EP 2 466 081 A2 beschreibt ein gattungsgemäßes Hydraulikventil für einen Schwenkmotorversteller einer Nockenwelle mit den Merkmalen des Oberbegriffs des Patentanspruchs 1.

### Offenbarung der Erfindung

Eine Aufgabe der Erfindung ist es, ein Hydraulikventil zu schaffen, das in einer einfachen und kompakten Bauweise ein gutes Steuerungsverhalten eines Schwenkmotorverstellers ermöglicht.

Eine weitere Aufgabe der Erfindung ist es, einen Schwenkmotorversteller einer Nockenwelle zu schaffen, der in einer einfachen und kompakten Bauweise ein gutes Steuerungsverhalten aufweist.

Die vorgenannten Aufgaben werden nach einem Aspekt der Erfindung gelöst mit den Merkmalen der unabhängigen Ansprüche.

Günstige Ausgestaltungen und Vorteile der Erfindung ergeben sich aus den weiteren Ansprüchen, der Beschreibung und der Zeichnung.

Es wird ein Hydraulikventil vorgeschlagen, insbesondere für einen Schwenkmotorversteller einer Nockenwelle, das einen Versorgungsanschluss mit einem Rückschlagventil zum Zuführen eines Hydraulikfluids, wenigstens einen ersten Arbeitsanschluss und einen zweiten Arbeitsanschluss, sowie wenigstens einen ersten Tankabfluss und einen zweiten Tankabfluss zum Ableiten des Hydraulikfluids umfasst. Weiter umfasst das Hydraulikventil einen entlang einer Längsrichtung einer Bohrung längsverschiebbar eingesetzten Kolben zum Verteilen des Hydraulikfluids von dem Versorgungsanschluss auf den ersten Arbeitsanschluss und/oder den zweiten Arbeitsanschluss, sowie zum Leiten des Hydraulikfluids von dem ersten Arbeitsanschluss auf den zweiten Arbeitsanschluss, sowie von dem ersten Arbeitsanschluss auf den ersten Tankabfluss und/oder von dem zweiten Arbeitsanschluss auf den zweiten Tankabfluss, sowie eine in dem Kolben gegen diesen längsverschiebbar angeordnete Hülse. Erfindungsgemäß wird dabei ein erster Fluidpfad von dem ersten Arbeitsanschluss zu dem zweiten Tankabfluss über eine von einer Druckdifferenz des Hydraulikfluids in dem Versorgungsanschluss und an dem ersten Arbeitsanschluss bewirkte Verschiebung der Hülse in Längsrichtung gesteuert.

Vorteile des beschriebenen Hydraulikventils liegen darin, dass das Hydraulikventil selbsttätig zwischen einem passiven, von Nockenwellenwechselmomenten getriebenen Modus in einen aktiven, durch den Druck des Hydraulikfluids getriebenen Modus und wieder zurück umschalten kann. Diese Umschaltung über die in dem Kolben gegen diesen längsverschiebbar angeordnete Hülse geschieht in Abhängigkeit des Druckunterschiedes des Versorgungsdrucks des Hydraulikfluids und des Kammerdruckes der zu entleerenden Druckkammer. Solange ein Nockenwellenwechselmoment in der gewünschten Richtung und ausreichender Höhe vorliegt, arbeitet das Ventil im passiven Modus nach dem Prinzip hydraulischer Freilauf. Dabei findet kein Tankrücklauf des Hydraulikfluids statt. Der Versorgungsanschluss dient dabei nur zum Ausgleich von Leckage des Hydraulikfluids aus der Druckkammer. Unterschreitet das gewünschte Nockenwellenwechselmoment den nutzbaren Bereich, so wechselt das Hydraulikventil selbsttätig in den aktiven Modus. Dabei wird die zu entleerende Druckkammer jetzt automatisch in Richtung des Tankabflusses geöffnet, die andere Druckkammer wird über den Versorgungsanschluss gefüllt. Diese schnelle Schaltfunktion und die Umschaltfunktion des Hydraulikventils sind komplett im Kolben integriert. Auf diese Weise lässt sich eine hohe Leistung des Hydraulikventils und damit des verbundenen Schwenkmotorverstellers erzielen. Der Bedarf an Hydraulikfluid ist dabei ähnlich niedrig wie bei Schwenkmotorverstellern mit rein passivem Steuerungsverhalten über die Nockenwellenwechselmomente.

In einer günstigen Ausführungsform kann die Hülse als einseitig offenes Rohr mit einem Boden sowie mit einer Öffnung zu dem ersten Arbeitsanschluss und einer Öffnung zu dem zweiten Tankabfluss ausgebildet sein. Auf diese Weise lässt sich die Hülse mit dem Druck des Hydraulikfluids in Längsrichtung verschieben und kann durch die beiden Öffnungen den ersten Arbeitsanschluss und den zweiten Tankabfluss des Schwenkmotorverstellers jeweils öffnen und verschließen.

Vorteilhafterweise kann die Hülse über den geschlossenen Boden mit dem Druck des Hydraulikfluids von dem ersten Arbeitsanschluss auf der Innenseite der Hülse sowie mit dem Druck des Hydraulikfluids von dem Versorgungsanschluss auf der Außenseite der Hülse durch die Zuleitung beaufschlagbar werden. Dadurch lässt sich über eine Druckänderung des Hydraulikfluids ein Längsverschieben der Hülse in dem Kolben des Hydraulikventils bewirken.

Zweckmäßigerweise kann der erste Fluidpfad von dem ersten Arbeitsanschluss zu dem zweiten Tankabfluss zumindest bereichsweise im Inneren der Hülse verlaufen. Die Hülse kann so die Steuerung des ersten Fluidpfads von dem ersten Arbeitsanschluss zu dem zweiten Tankabfluss vorteilhaft und effektiv bewirken, sodass die Umschaltung von einem Modus des Schwenkmotorverstellers in einen anderen Modus schnell durchgeführt werden kann.

In einer vorteilhaften Ausgestaltung kann eine erste Arbeitsposition der Hülse vorgesehen sein, in welcher der zweite Tankabfluss verschlossen ist, und eine zweite Arbeitsposition vorgesehen sein, in welcher der zweite Tankabfluss offen ist. Auf diese Weise können sowohl der passive Modus des verbundenen Schwenkmotorverstellers als auch der aktive Modus effektiv dargestellt werden und außerdem sehr schnell zwischen den beiden Modi umgeschaltet werden.

In einer weiteren vorteilhaften Ausgestaltung kann der Boden der Hülse eine Zuleitung zu dem Versorgungsanschluss in der ersten Arbeitsposition dicht verschließen. So ist kein weiteres Ventilelement nötig, um die Umschaltung zwischen dem passiven Modus in den aktiven Modus des Schwenkmotorverstellers vorzunehmen.

Zweckmäßigerweise kann dabei eine Feder vorgesehen sein, um die Hülse in der ersten Arbeitsposition zu halten, wenn der Druck des Hydraulikfluids abfällt. Auf diese Weise lassen sich kleinere Druckschwankungen des Hydraulikfluids ausgleichen, sodass das Steuerungsverhalten des Hydraulikventils dadurch stabil gestaltet werden kann.

Vorteilhafterweise kann der erste Fluidpfad von dem ersten Arbeitsanschluss zu dem zweiten Tankabfluss offen sein sowie ein zweiter Fluidpfad von dem Versorgungsanschluss zu dem zweiten Arbeitsanschluss offen sein, wenn der Druck des Hydraulikfluids an dem ersten Arbeitsanschluss kleiner ist als der Druck in dem Versorgungsanschluss. Auf diese Weise kann der passive Modus des Schwenkmotorverstellers günstig realisiert werden.

Der aktive Modus des Schwenkmotorverstellers kann dagegen dargestellt werden, indem der erste Fluidpfad von dem ersten Arbeitsanschluss zu dem zweiten Tankabfluss geschlossen ist sowie ein dritter Fluidpfad von dem ersten Arbeitsanschluss zu dem zweiten Arbeitsanschluss offen ist und das Rückschlagventil an dem Versorgungsanschluss geschlossen ist, wenn der Druck des Hydraulikfluids an dem ersten Arbeitsanschluss größer ist als der Druck in dem Versorgungsanschluss. Dadurch lässt sich ein stabiles Steuerungsverhalten des Hydraulikventils mit einer schnellen Umschaltmöglichkeit zwischen den beiden Modi des Schwenkmotorverstellers erreichen.

Die Erfindung betrifft nach einem weiteren Aspekt einen Schwenkmotorversteller einer Nockenwelle, umfassend ein Hydraulikventil nach einem der vorhergehenden Ansprüche, wobei ein erster Arbeitsanschluss mit einer ersten Druckkammer des Schwenkmotorverstellers verbunden ist und ein zweiter Arbeitsanschluss mit einer zweiten Druckkammer des Schwenkmotorverstellers verbunden ist. Dabei steuert das Hydraulikventil abhängig von einer Druckdifferenz des Hydraulikfluids in einem Versorgungsanschluss und an dem ersten Arbeitsanschluss einen Fluidpfad von dem ersten Arbeitsanschluss zu einem zweiten Tankabfluss. Auf diese Weise lässt sich eine hohe Leistung des Schwenkmotorverstellers erzielen. Der Bedarf an Hydraulikfluid ist dabei ähnlich niedrig wie bei Schwenkmotorverstellern mit rein passivem Steuerungsverhalten über die Nockenwellenwechselmomente.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Schnitt durch einen Schwenkmotorversteller nach dem Stand der Technik;
- Fig. 2: einen Schnitt durch ein Hydraulikventil zur Verstellung eines Schwenkmotorverstellers nach einem Ausführungsbeispiel der Erfindung in einer ersten Arbeitsposition;
- Fig. 3: einen Schnitt durch ein Hydraulikventil zur Verstellung eines Schwenkmotorverstellers nach dem Ausführungsbeispiel der Erfindung gemäß Fig. 2 in einer zweiten Arbeitsposition; und
- Fig. 4: einen Schnitt durch eine Detailansicht einer Hülse eines Hydraulikventils nach einem Ausführungsbeispiel der Erfindung gemäß Fig. 2.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

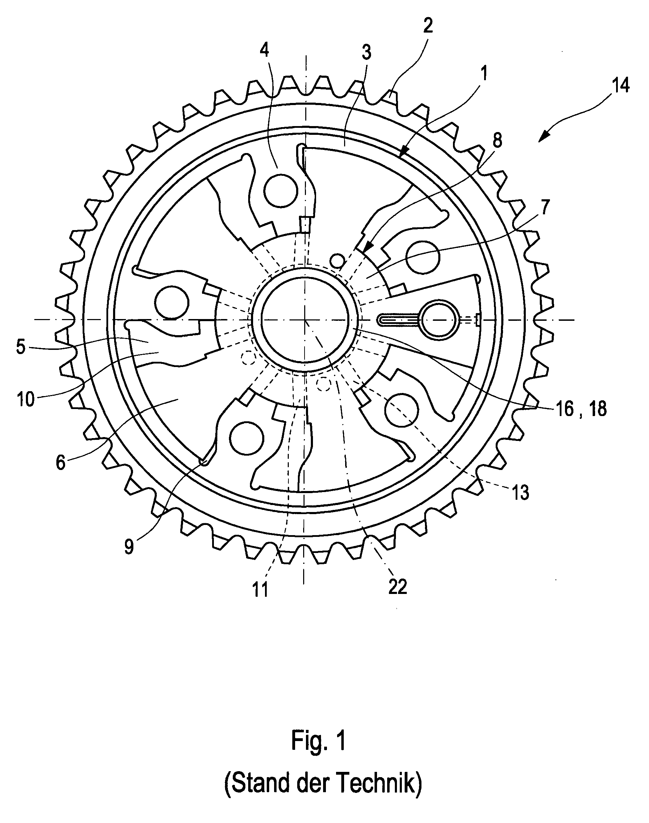

Mit einem Schwenkmotorversteller 14 nach dem Stand der Technik gemäß Figur 1 wird während des Betriebes eines Verbrennungsmotors die Winkellage an der Nockenwelle 18 gegenüber einem Antriebsrad 2 stufenlos verändert. Durch Verdrehen der Nockenwelle 18 werden die Öffnungs- und Schließzeitpunkte der Gaswechselventile so verschoben, dass der Verbrennungsmotor bei der jeweiligen Drehzahl seine optimale Leistung. bringt. Der Schwenkmotorversteller 14 weist einen zylindrischen Stator 1 auf, der drehfest mit dem Antriebsrad 2 verbunden ist. Im Ausführungsbeispiel ist das Antriebsrad 2 ein Kettenrad, über das eine nicht näher dargestellte Kette geführt ist. Das Antriebsrad 2 kann aber auch ein Zahnriemenrad sein, über das ein Antriebsriemen als Antriebselement geführt ist. Über dieses Antriebselement und das Antriebsrad 2 ist der Stator 1 mit der Kurbelwelle antriebsverbunden.

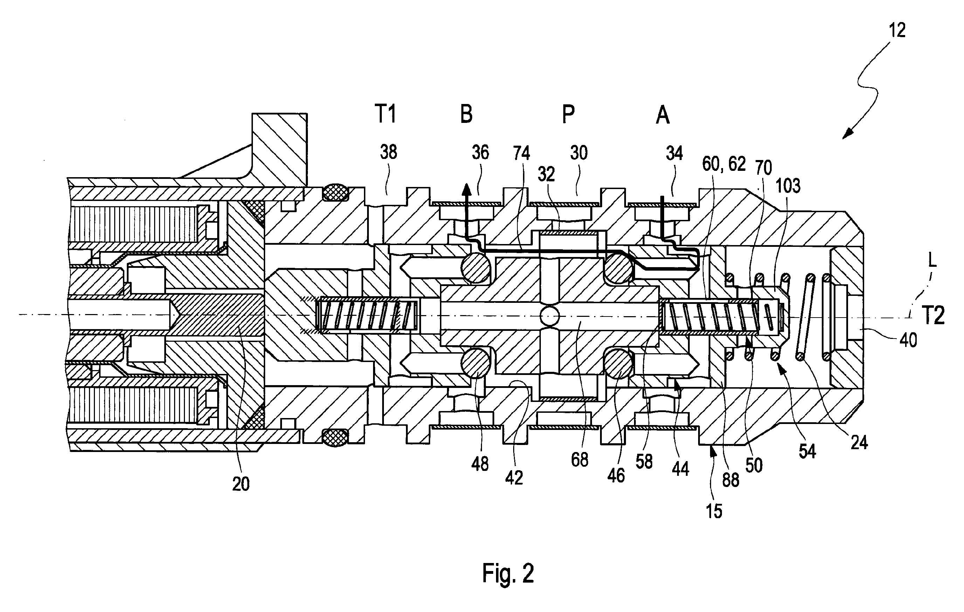

Der Stator 1 umfasst einen zylindrischen Statorgrundkörper 3, an dessen Innenseite radial nach innen in gleichen Abständen Stege 4 abstehen. Zwischen benachbarten Stegen 4 werden Zwischenräume 5 gebildet, in die, über ein in Figur 2 näher dargestelltes Hydraulikventil 12 gesteuert, Hydraulikfluid eingebracht wird. Das Hydraulikventil 12 ist dabei als dezentrales Ventil ausgeführt, kann aber auch in einer Ausgestaltung als Zentralventil ausgeführt sein. Zwischen benachbarten Stegen 4 ragen Flügel 6, die radial nach außen von einer zylindrischen Rotornabe 7 eines Rotors 8 abstehen. Diese Flügel 6 unterteilen die Zwischenräume 5 zwischen den Stegen 4 jeweils in zwei Druckkammern 9 und 10.

Die Stege 4 liegen mit ihren Stirnseiten dichtend an der Außenmantelfläche der Rotornabe 7 an. Die Flügel 6 ihrerseits liegen mit ihren Stirnseiten dichtend an der zylindrischen Innenwand des Statorgrundkörpers 3 an.

Der Rotor 8 ist drehfest mit der Nockenwelle 18 verbunden. Um die Winkellage zwischen der Nockenwelle 18 und dem Antriebsrad 2 zu verändern, wird der Rotor 8 relativ zum Stator 1 gedreht. Hierzu wird je nach gewünschter Drehrichtung das Hydraulikfluid in den Druckkammern 9 oder 10 unter Druck gesetzt, während die jeweils anderen Druckkammern 10 oder 9 zum Tank des Hydraulikfluids hin entlastet werden. Um den Rotor 8 gegenüber dem Stator 1 entgegen dem Uhrzeigersinn in die dargestellte Stellung zu verschwenken, wird vom Hydraulikventil 12 ein ringförmiger erster Rotorkanal in der Rotornabe 7 unter Druck gesetzt. Von diesem ersten Rotorkanal führen dann weitere Kanäle 11 in die Druckkammern 10. Dieser erste Rotorkanal ist dem ersten Arbeitsanschluss 34 zugeordnet. Um den Rotor 8 hingegen im Uhrzeigersinn zu verschwenken, wird vom Hydraulikventil 12 ein zweiter ringförmiger Rotorkanal in der Rotornabe 7 unter Druck gesetzt. Dieser zweite Rotorkanal ist dem zweiten Arbeitsanschluss 36 zugeordnet. Diese beiden Rotorkanäle sind bezüglich einer Zentralachse 22 axial beabstandet zueinander angeordnet.

Der Schwenkmotorverstellers 14 ist auf die als Hohlrohr 16 ausgeführte gebaute Nockenwelle 18 aufgesetzt. Dazu ist der Rotor 8 auf die Nockenwelle 18 gesteckt. Der Schwenkmotorversteller 14 ist mittels des in Figur 2 ersichtlichen Hydraulikventils 12 schwenkbar.

Der Schwenkmotorversteller 14 einer Nockenwelle 18 umfasst erfindungsgemäß ein Hydraulikventil 10, wobei ein erster Arbeitsanschluss 34 mit der ersten Druckkammer 9 des Schwenkmotorverstellers 14 verbunden ist und ein zweiter Arbeitsanschluss 36 mit der zweiten Druckkammer 10 des Schwenkmotorverstellers 14 verbunden ist. Dabei steuert das Hydraulikventil 12 abhängig von einer Druckdifferenz des Hydraulikfluids in einem Versorgungsanschluss 30 und an dem ersten Arbeitsanschluss 34 einen Fluidpfad 52 von dem ersten Arbeitsanschluss 34 zu einem zweiten Tankabfluss 40.

Figur 2 zeigt einen Schnitt durch ein Hydraulikventil 12 zur Verstellung eines Schwenkmotorverstellers 14 insbesondere einer Nockenwelle 18 nach einem Ausführungsbeispiel der Erfindung in einer ersten Arbeitsposition 54.

Innerhalb des Hohlrohrs 16 in Figur 1 ist eine dem Hydraulikventil 12 zugehörige Buchse 15 koaxial eingesetzt. In die zentrale Bohrung 42 dieser Buchse 15 ist ein hohler Kolben 44 gegen die Kraft einer Schraubendruckfeder 24 verschiebbar geführt. Dazu stützt sich die Schraubendruckfeder 24 einerseits am Kolben 44 und andererseits gehäusefest ab. Zur Anlage für die Schraubendruckfeder 24 ist innerhalb des Kolbens 44 ein Absatz 88 vorgesehen, dem sich zum Ende des Kolbens 44 hin eine radiale Federführung 103 anschließt. Am nockenwellenaußenseitigen - d. h. hinteren- Ende der Buchse 15 liegt an dem Kolben 44 ein Stößel 20 eines elektromagnetischen Stellgliedes an, über welches der Kolben 44 in Längsrichtung L verschoben werden kann, um eine hydraulische Steuerungsfunktion auszuüben. Zusätzlich sind an dem Kolben 44 zwei ringförmige Rückschlagventile 46 und 48 angeordnet, welche sich abhängig vom Druck des Hydraulikfluids in den Arbeitsanschlüssen 34 und 36 sowie vom Druck im Versorgungsanschluss 30 in Längsrichtung L verschieben.

Das Hydraulikventil 12 umfasst einen Versorgungsanschluss 30 mit einem Rückschlagventil 32 zum Zuführen eines Hydraulikfluids, einen ersten Arbeitsanschluss 34 und einen zweiten Arbeitsanschluss 36, sowie einen ersten Tankabfluss 38 und einen zweiten Tankabfluss 40 zum Ableiten des Hydraulikfluids. Weiter umfasst das Hydraulikventil 12 einen entlang einer Längsrichtung L einer Bohrung 42 längsverschiebbar eingesetzten Kolben 44 zum Verteilen des Hydraulikfluids von dem Versorgungsanschluss 30 auf den ersten Arbeitsanschluss 34 und/oder den zweiten Arbeitsanschluss 36, sowie zum Leiten des Hydraulikfluids von dem ersten Arbeitsanschluss 34 auf den zweiten Arbeitsanschluss 36, sowie von dem ersten Arbeitsanschluss 34 auf den ersten Tankabfluss 38 und/oder von dem zweiten Arbeitsanschluss 36 auf den zweiten Tankabfluss 40.

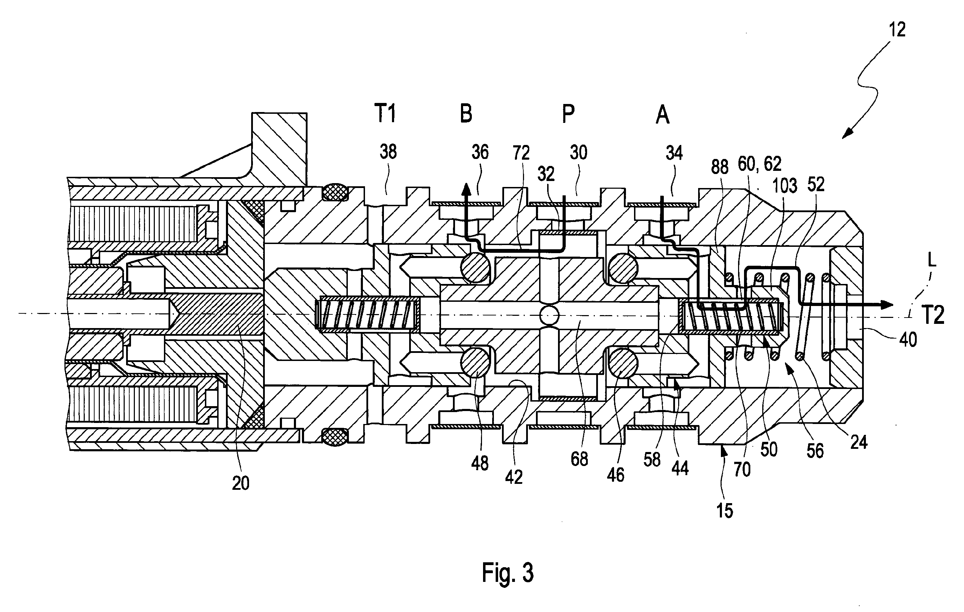

Außerdem umfasst das Hydraulikventil 12 eine in dem Kolben 44 gegen diesen längsverschiebbar angeordnete Hülse 50. Über diese Hülse 50 wird ein erster Fluidpfad 52 von dem ersten Arbeitsanschluss 34 zu dem zweiten Tankabfluss 40 über eine von einer Druckdifferenz des Hydraulikfluids in dem Versorgungsanschluss 30 und an dem ersten Arbeitsanschluss 34 bewirkte Verschiebung der Hülse 50 in Längsrichtung L gesteuert. Die Hülse 50 ist als einseitig offenes Rohr mit einem Boden 58 sowie mit einer Öffnung 60 zu dem ersten Arbeitsanschluss 34 und einer Öffnung 62 zu dem zweiten Tankabfluss 40 ausgebildet. Die beiden Öffnungen 60 und 62 können auch, wie in Figur 2, als eine einzige Öffnung ausgebildet sein. Auf diese Weise lässt sich die Hülse 50 mit dem Druck des Hydraulikfluids in Längsrichtung L verschieben und kann durch die beiden Öffnungen 60, 62 den ersten Arbeitsanschluss 34 und den zweiten Tankabfluss 40 des Schwenkmotorverstellers 14 jeweils öffnen und verschließen. Die Hülse 50 kann so die Steuerung des ersten Fluidpfads 52 von dem ersten Arbeitsanschluss 34 zu dem zweiten Tankabfluss 40 vorteilhaft und effektiv bewirken, sodass die Umschaltung von einem Modus des Schwenkmotorverstellers 14 in einen anderen Modus schnell durchgeführt werden kann. Die Hülse 50 ist über den geschlossenen Boden 58 mit dem Druck des Hydraulikfluids von dem ersten Arbeitsanschluss 34 auf der Innenseite 64 der Hülse 50 sowie mit dem Druck des Hydraulikfluids von dem Versorgungsanschluss 30 auf der Außenseite 66 der Hülse 50 durch die Zuleitung 68 beaufschlagbar. Eine erste Arbeitsposition 54 der Hülse 50 ist vorgesehen, in welcher der zweite Tankabfluss 40 verschlossen ist, und eine zweite Arbeitsposition 56 ist vorgesehen, in welcher der zweite Tankabfluss 40 offen ist. Der Boden 58 der Hülse 50 verschließt eine Zuleitung 68 zu dem Versorgungsanschluss 30 in der ersten Arbeitsposition 54 dicht. Eine Feder 70 ist vorgesehen, um die Hülse 50 in der ersten Arbeitsposition 54 zu halten, wenn der Druck des Hydraulikfluids abfällt. Auf diese Weise lassen sich kleinere Druckschwankungen des Hydraulikfluids ausgleichen, sodass das Steuerungsverhalten des Hydraulikventils 12 dadurch stabil gestaltet werden kann. In Figur 2 ist das Hydraulikventil 12 in der ersten Arbeitsposition 54 dargestellt. Wenn der Druck des Hydraulikfluids an dem ersten Arbeitsanschluss 34 größer ist als der Druck in dem Versorgungsanschluss 30, ist der erste Fluidpfad 52 von dem ersten Arbeitsanschluss 34 zu dem zweiten Tankabfluss 40 (in Fig. 3 explizit dargestellt) geschlossen, während ein dritter Fluidpfad 74 von dem ersten Arbeitsanschluss 34 zu dem zweiten Arbeitsanschluss 36 offen ist. Ein zweiter Fluidpfad 32 von dem Versorgungsanschluss 30 zu dem zweiten Arbeitsanschluss 36 (in Fig. 3 explizit dargestellt) ist durch das Rückschlagventil 32 an dem Versorgungsanschluss 30 geschlossen.

Figur 3 zeigt weiter einen Schnitt durch ein Hydraulikventil 12 zur Verstellung eines Schwenkmotorverstellers 14 nach dem Ausführungsbeispiel der Erfindung gemäß Figur 2 in einer zweiten Arbeitsposition 56. Der erste Fluidpfad 52 verläuft von dem ersten Arbeitsanschluss 34 zu dem zweiten Tankabfluss 40 zumindest bereichsweise im Inneren der Hülse 50. Wenn der Druck des Hydraulikfluids an dem ersten Arbeitsanschluss 34 kleiner ist als der Druck in dem Versorgungsanschluss 30, ist der erste Fluidpfad 52 von dem ersten Arbeitsanschluss 34 zu dem zweiten Tankabfluss 40 offen sowie ein zweiter Fluidpfad 72 von dem Versorgungsanschluss 30 zu dem zweiten Arbeitsanschluss 36 ebenfalls offen. Die Hülse 50 ist dabei von dem Druck des Hydraulikfluids über die Zuleitung 68 in die zweite Arbeitsposition 56 geschoben worden, wobei die Feder 70 zusammengedrückt wird, sodass das Hydraulikfluid von dem ersten Arbeitsanschluss 34 durch die Öffnungen 60, 62 über das Innere der Hülse zu dem Tankabfluss 40 strömen kann.

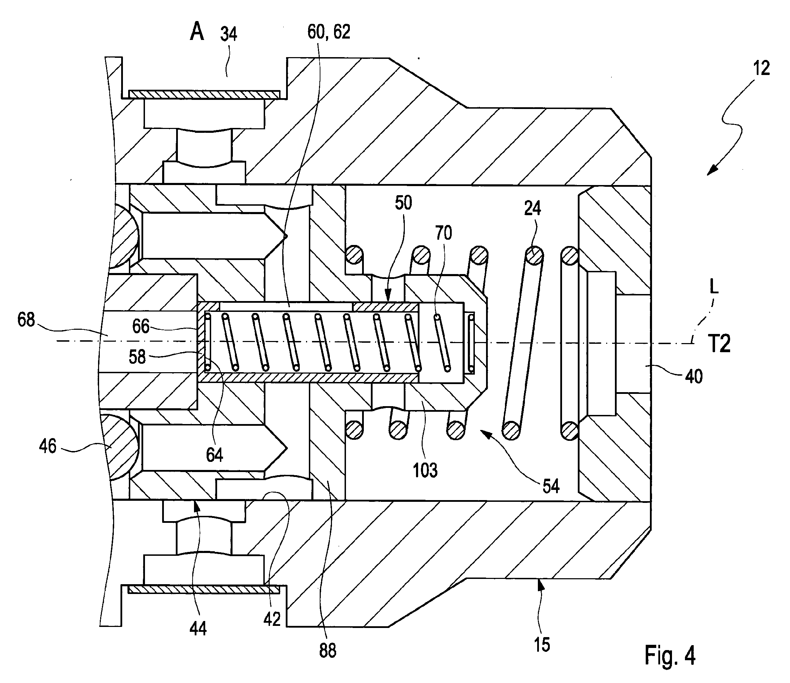

In Figur 4 ist ein Schnitt durch eine Detailansicht einer Hülse 50 eines Hydraulikventils 12 nach dem Ausführungsbeispiel der Erfindung gemäß Figur 2 dargestellt. Die Hülse 50 ist in der ersten Arbeitsposition 54 bei niedrigem Druck des Hydraulikfluids in dem Versorgungsanschluss 30 durch die Feder 70 an einen Anschlag geschoben, was außerdem durch den Druck auf der Innenseite 64 der Hülse 50 gegen den Boden 58 unterstützt wird. Der Druck auf der Außenseite 66 der Hülse 50 durch die Zuleitung 68 ist dabei geringer als der Druck auf die Innenseite 64, sodass der Boden 58 der Hülse 50 die Zuleitung 68 dicht abschließt. Der zweite Tankabfluss 40 ist gegen die Innenseite 64 der Hülse 50 in dieser ersten Arbeitsposition 54 verschlossen.

## Patentansprüche

1. Hydraulikventil (12), insbesondere für einen Schwenkmotorversteller (14) einer Nockenwelle (18), umfassend
- einen Versorgungsanschluss (30) mit einem Rückschlagventil (32) zum Zuführen eines Hydraulikfluids,
- wenigstens einen ersten Arbeitsanschluss (34) und einen zweiten Arbeitsanschluss (36), sowie
- wenigstens einen ersten Tankabfluss (38) und einen zweiten Tankabfluss (40) zum Ableiten des Hydraulikfluids,
- einen entlang einer Längsrichtung (L) einer Bohrung (42) längsverschiebbar eingesetzten Kolben (44) zum Verteilen des Hydraulikfluids von dem Versorgungsanschluss (30) auf den ersten Arbeitsanschluss (34) und/oder den zweiten Arbeitsanschluss (36), sowie zum Leiten des Hydraulikfluids von dem ersten Arbeitsanschluss (34) auf den zweiten Arbeitsanschluss (36), sowie von dem ersten Arbeitsanschluss (34) auf den ersten Tankabfluss (38) und/oder von dem zweiten Arbeitsanschluss (36) auf den zweiten Tankabfluss (40),
- eine in dem Kolben (44) gegen diesen längsverschiebbar angeordnete Hülse (50),
**dadurch gekennzeichnet, dass** ein erster Fluidpfad (52) von dem ersten Arbeitsanschluss (34) zu dem zweiten Tankabfluss (40) über eine von einer Druckdifferenz des Hydraulikfluids in dem Versorgungsanschluss (30) und an dem ersten Arbeitsanschluss (34) bewirkte Verschiebung der Hülse (50) in Längsrichtung (L) gesteuert wird.

2. Hydraulikventil nach Anspruch 1, wobei die Hülse (50) als einseitig offenes Rohr mit einem Boden (58) sowie mit einer Öffnung (60) zu dem ersten Arbeitsanschluss (34) und einer Öffnung (62) zu dem zweiten Tankabfluss (40) ausgebildet ist.

3. Hydraulikventil nach Anspruch 1 oder 2, wobei die Hülse (50) über den geschlossenen Boden (58) mit dem Druck des Hydraulikfluids von dem ersten Arbeitsanschluss (34) auf der Innenseite (64) der Hülse (50) sowie mit dem Druck des Hydraulikfluids von dem Versorgungsanschluss (30) auf der Außenseite (66) der Hülse (50) durch die Zuleitung (68) beaufschlagbar ist.

4. Hydraulikventil nach einem der vorhergehenden Ansprüche, wobei der erste Fluidpfad (52) von dem ersten Arbeitsanschluss (34) zu dem zweiten Tankabfluss (40) zumindest bereichsweise im Inneren der Hülse (50) verläuft.

5. Hydraulikventil nach einem der vorhergehenden Ansprüche, wobei eine erste Arbeitsposition (54) der Hülse (50) vorgesehen ist, in welcher der zweite Tankabfluss (40) verschlossen ist, und eine zweite Arbeitsposition (56) vorgesehen ist, in welcher der zweite Tankabfluss (40) offen ist.

6. Hydraulikventil nach Anspruch 5, wobei der Boden (58) der Hülse (50) eine Zuleitung (68) zu dem Versorgungsanschluss (30) in der ersten Arbeitsposition (54) dicht verschließt.

7. Hydraulikventil nach Anspruch 5 oder 6, wobei eine Feder (70) vorgesehen ist, um die Hülse (50) in der ersten Arbeitsposition (54) zu halten, wenn der Druck des Hydraulikfluids abfällt.

8. Hydraulikventil nach einem der vorhergehenden Ansprüche, wobei der erste Fluidpfad (52) von dem ersten Arbeitsanschluss (34) zu dem zweiten Tankabfluss (40) offen ist sowie ein zweiter Fluidpfad (72) von dem Versorgungsanschluss (30) zu dem zweiten Arbeitsanschluss (36) offen ist, wenn der Druck des Hydraulikfluids an dem ersten Arbeitsanschluss (34) kleiner ist als der Druck in dem Versorgungsanschluss (30).

9. Hydraulikventil nach einem der vorhergehenden Ansprüche, wobei der erste Fluidpfad (52) von dem ersten Arbeitsanschluss (34) zu dem zweiten Tankabfluss (40) geschlossen ist sowie ein dritter Fluidpfad (74) von dem ersten Arbeitsanschluss (34) zu dem zweiten Arbeitsanschluss (36) offen ist und das Rückschlagventil (32) an dem Versorgungsanschluss (30) geschlossen ist, wenn der Druck des Hydraulikfluids an dem ersten Arbeitsanschluss (34) größer ist als der Druck in dem Versorgungsanschluss (30).

10. Schwenkmotorversteller (14) einer Nockenwelle (18), umfassend ein Hydraulikventil (12) nach einem der vorhergehenden Ansprüche, wobei ein erster Arbeitsanschluss (34) mit einer ersten Druckkammer (9) des Schwenkmotorverstellers (14) verbunden ist und ein zweiter Arbeitsanschluss (36) mit einer zweiten Druckkammer (10) des Schwenkmotorverstellers (14) verbunden ist, wobei das Hydraulikventil (12) abhängig von einer Druckdifferenz des Hydraulikfluids in einem Versorgungsanschluss (30) und an dem ersten Arbeitsanschluss (34) einen Fluidpfad (52) von dem ersten Arbeitsanschluss (34) zu einem zweiten Tankabfluss (40) steuert.

## Claims

1. Hydraulic valve (12), in particular for a pivoting motor adjuster (14) of a camshaft (18), comprising
- a supply connector (30) with a check valve (32) for feeding in a hydraulic fluid,
- at least a first working connector (34) and a second working connector (36), and
- at least a first tank outlet (38) and a second tank outlet (40) for discharging the hydraulic fluid,
- a piston (44) which is inserted such that it can be displaced longitudinally along a longitudinal direction (L) of a bore (42) in order to distribute the hydraulic fluid from the supply connector (30) to the first working connector (34) and/or the second working connector (36), and for guiding the hydraulic fluid from the first working connector (34) to the second working connector (36), and from the first working connector (34) to the first tank outlet (38) and/or from the second working connector (36) to the second tank outlet (40),
- a sleeve (50) which is arranged in the piston (44) such that it can be displaced longitudinally with respect to the latter,
**characterized in that** a first fluid path (52) from the first working connector (34) to the second tank outlet (40) is controlled via a displacement of the sleeve (50) in the longitudinal direction (L), which displacement is brought about by a pressure difference of the hydraulic fluid in the supply connector (30) and at the first working connector (34).

2. Hydraulic valve according to Claim 1, the sleeve (50) being configured as a tube which is open on one side with a bottom (58) and with an opening (60) to the first working connector (34) and an opening (62) to the second tank outlet (40).

3. Hydraulic valve according to Claim 1 or 2, it being possible for the sleeve (50) to be loaded via the closed bottom (58) with the pressure of the hydraulic fluid from the first working connector (34) on the inner side (64) of the sleeve (50) and with the pressure of the hydraulic fluid from the supply connector (30) on the outer side (66) of the sleeve (50) through the feed line (68).

4. Hydraulic valve according to one of the preceding claims, the first fluid path (52) from the first working connector (34) to the second tank outlet (40) running at least in regions in the interior of the sleeve (50).

5. Hydraulic valve according to one of the preceding claims, a first working position (54) of the sleeve (50) being provided, in which the second tank outlet (40) is closed, and a second working position (56) being provided, in which the second tank outlet (40) is open.

6. Hydraulic valve according to Claim 5, the bottom (58) of the sleeve (50) sealingly closing a feed line (68) to the supply connector (30) in the first working position (54).

7. Hydraulic valve according to Claim 5 or 6, a spring (70) being provided, in order to hold the sleeve (50) in the first working position (54) if the pressure of the hydraulic fluid drops.

8. Hydraulic valve according to one of the preceding claims, the first fluid path (52) from the first working connector (34) to the second tank outlet (40) being open, and a second fluid path (72) from the supply connector (30) to the second working connector (36) being open, if the pressure of the hydraulic fluid at the first working connector (34) is lower than the pressure in the supply connector (30).

9. Hydraulic valve according to one of the preceding claims, the first fluid path (52) from the first working connector (34) to the second tank outlet (40) being closed, and a third fluid path (74) from the first working connector (34) to the second working connector (36) being open, and the check valve (32) at the supply connector (30) being closed, if the pressure of the hydraulic fluid at the first working connector (34) is higher than the pressure in the supply connector (30).

10. Pivoting motor adjuster (14) of a camshaft (18), comprising a hydraulic valve (12) according to one of the preceding claims, a first working connector (34) being connected to a first pressure chamber (9) of the pivoting motor adjuster (14), and a second working connector (36) being connected to a second pressure chamber (10) of the pivoting motor adjuster (14), the hydraulic valve (12) controlling a fluid path (52) from the first working connector (34) to a second tank outlet (40) in a manner which is dependent on a pressure difference of the hydraulic fluid in a supply connector (30) and at the first working connector (34).

## Revendications

1. Soupape hydraulique (12), en particulier pour un déphaseur (14) d'arbre à cames (18) d'un moteur pivotant, comprenant:
- un raccord d'alimentation (30) avec un clapet antiretour (32) pour l'alimentation d'un fluide hydraulique,
- au moins un premier raccord de travail (34) et un deuxième raccord de travail (36), et
- au moins une première sortie de réservoir (38) et une deuxième sortie de réservoir (40) pour évacuer le fluide hydraulique,
- un piston (44) inséré de manière déplaçable longitudinalement le long d'une direction longitudinale (L) d'un alésage (42) pour distribuer le fluide hydraulique depuis le raccord d'alimentation (30) jusqu'au premier raccord de travail (34) et/ou au deuxième raccord de travail (36), et pour diriger le fluide hydraulique depuis le premier raccord de travail (34) vers le deuxième raccord de travail (36), et depuis le premier raccord de travail (34) vers la première sortie de réservoir (38) et/ou depuis le deuxième raccord de travail (36) vers la deuxième sortie de réservoir (40),
- une douille (50) disposée de manière déplaçable longitudinalement dans le piston (44) contre ce dernier,
**caractérisée en ce qu'**un premier chemin de fluide (52) est commandé dans la direction longitudinale (L) depuis le premier raccord de travail (34) jusqu'à la deuxième sortie de réservoir (40) par le biais d'un déplacement de la douille (50) provoqué par une différence de pression du fluide hydraulique dans le raccord d'alimentation (30) et au niveau du premier raccord de travail (34).

2. Soupape hydraulique selon la revendication 1, dans laquelle la douille (50) est réalisée sous forme de tube ouvert d'un côté avec un fond (58) et avec une ouverture (60) vers le premier raccord de travail (34) et une ouverture (62) vers la deuxième sortie de réservoir (40).

3. Soupape hydraulique selon la revendication 1 ou 2, dans laquelle la douille (50) peut être sollicitée par le biais du fond fermé (58) avec la pression du fluide hydraulique provenant du premier raccord de travail (34) sur le côté intérieur (64) de la douille (50) et par la pression du fluide hydraulique provenant du raccord d'alimentation (30) sur le côté extérieur (66) de la douille (50) par la conduite d'alimentation (68).

4. Soupape hydraulique selon l'une quelconque des revendications précédentes, dans laquelle le premier chemin de fluide (52) s'étend depuis le premier raccord de travail (34) jusqu'à la deuxième sortie de réservoir (40) au moins en partie à l'intérieur de la douille (50).

5. Soupape hydraulique selon l'une quelconque des revendications précédentes, dans laquelle une première position de travail (54) de la douille (50) est prévue, dans laquelle la deuxième sortie de réservoir (40) est fermée, et une deuxième position de travail (56) est prévue, dans laquelle la deuxième sortie de réservoir (40) est ouverte.

6. Soupape hydraulique selon la revendication 5, dans laquelle le fond (58) de la douille (50) ferme hermétiquement une conduite d'alimentation (68) allant au raccord d'alimentation (30) dans la première position de travail (54).

7. Soupape hydraulique selon la revendication 5 ou 6, dans laquelle un ressort (70) est prévu pour retenir la douille (50) dans la première position de travail (54) lorsque la pression du fluide hydraulique diminue.

8. Soupape hydraulique selon l'une quelconque des revendications précédentes, dans laquelle le premier chemin de fluide (52) allant du premier raccord de travail (34) à la deuxième sortie de réservoir (40) est ouvert et un deuxième chemin de fluide (72) allant du raccord d'alimentation (30) au deuxième raccord de travail (36) est ouvert lorsque la pression du fluide hydraulique au niveau du premier raccord de travail (34) est inférieure à la pression dans le raccord d'alimentation (30).

9. Soupape hydraulique selon l'une quelconque des revendications précédentes, dans laquelle le premier chemin de fluide (52) allant du premier raccord de travail (34) à la deuxième sortie de réservoir (40) est fermé et un troisième chemin de fluide (74) allant du premier raccord de travail (34) au deuxième raccord de travail (36) est ouvert et le clapet antiretour (32) au niveau du raccord d'alimentation (30) est fermé lorsque la pression de fluide hydraulique au niveau du premier raccord de travail (34) est supérieure à la pression dans le raccord d'alimentation (30).

10. Déphaseur (14) d'arbre à cames (18) d'un moteur pivotant, comprenant une soupape hydraulique (12) selon l'une quelconque des revendications précédentes, dans lequel un premier raccord de travail (34) est connecté à une première chambre de pression (9) du déphaseur (14) de moteur pivotant et un deuxième raccord de travail (36) est connecté à une deuxième chambre de pression (10) du déphaseur (14) de moteur pivotant, la soupape hydraulique (12) commandant un chemin de fluide (52) allant du premier raccord de travail (34) à une deuxième sortie de réservoir (40) en fonction d'une différence de pression de fluide hydraulique dans un raccord d'alimentation (30) et au niveau du premier raccord de travail (34).
